# EUROPÄISCHE PATENTANMELDUNG

(11) **EP 0 748 679 A1**
(43) Veröffentlichungstag der Anmeldung: **18.12.1996**
(21) Anmeldenummer: 96109226.9
(22) Anmeldetag: 08.06.1996
(51) Int. Cl.: B29C 45/73

(54) **Verfahren und Vorrichtung zum Spritzgiessen**

(30) Priorität: 16.06.1995 DE 19521550
(71) Anmelder: Luckow, Hans-Jürgen, D-24558 Henstedt-Rhen (DE)
(72) Erfinder: Luckow, Hans-Jürgen, D-24558 Henstedt-Rhen (DE)
(74) Vertreter: Klickow, Hans-Henning

(57) **Zusammenfassung**

Das Verfahren dient zum Spritzgießen von Werkstücken aus plastifizierbarem Material. Das plastifizierbare Material wird erwärmt, über Zuführkanäle einem Formeinsatz eines Werkzeuges zugeleitet und nach einem Abkühlen aus dem Formeinsatz entnommen. Im Bereich des Werkzeuges wird eine Temperierung durch Zufuhr eines flüssigen Temperiermediums durch Wärmeübertragungskanäle hindurch vorgesehen. Der Formeinsatz wird relativ zum Werkzeugblock thermisch isoliert und durch die Einsatzkanäle wird das flüssige Temperiermedium hindurchgeleitet.

## Beschreibung

Die Erfindung betrifft ein Verfahren zum Spritzgießen von Werkstücken aus plastifizierbarem Material, bei dem das plastifizierbare Material erwärmt, über Zuführkanäle einem Formeinsatz eines Werkzeuges zugeleitet und nach einem Abkühlen aus dem Formeinsatz entnommen wird und bei dem im Bereich des Werkzeuges eine Temperierung durch Zufuhr eines flüssigen Temperiermediums durch Wärmeübertragungskanäle hindurch vorgesehen ist.

Die Erfindung betrifft darüber hinaus eine Vorrichtung zum Spritzgießen von Werkstücken aus plastifizierbarem Material, die ein mit mindestens einem Formeinsatz und einem Werkzeugblock versehenes Werkzeug aufweist und bei der eine Temperierung vorgesehen ist, die mindestens einen Anschluß zur Zuleitung eines flüssigen Temperiermediums in den Bereich von Wärmeübertragungskanälen aufweist, die sich durch das Werkzeug hindurch erstrecken.

Derartige Verfahren zum Spritzgießen von Werkstücken werden beispielsweise angewendet, um Materialien aus thermoplastischen Kunststoffen zu verarbeiten. Eine Anwendung besteht beispielsweise in der Herstellung von Verpackungseinheiten für Kompaktdiscs.

Ein Verfahren zum Temperieren einer Spritzgußform wird beispielsweise in der DE-OS 43 07 347 beschrieben. Die Temperierung erfolgt mit Hilfe eines Heizmediums beziehungsweise eines Kühlmediums. Unter Berücksichtigung einer Istwerterfassung wird eine Regelung durchgeführt.

Eine generelle Anforderung an Verfahren und Vorrichtungen zum Spritzgießen von Werkstücken besteht darin, möglichst energiesparend zu arbeiten und dennoch eine möglichst hohe Durchsatzrate zu gewährleisten. Die Erfüllung dieser Anforderungen wird dadurch erschwert, daß ein grundsätzlicher Arbeitsablauf darin besteht, daß das plastifizierte Material im heißen plastifizierten Zustand in den Formeinsatz eingespritzt wird, anschließend abgekühlt werden muß und nach Erreichen einer genügenden Formstabilität aus dem Werkzeug entnommen wird. Es muß somit in einem steten Wechsel zyklisch eine Aufheizung und eine Abkühlung des Werkzeuges erfolgen, um die Produktion der Werkstücke durchführen zu können.

Darüber hinaus muß dafür Sorge getragen werden, daß unzulässige Erwärmungen im Bereich eines Trägers für das Werkzeug vermieden werden. Eine übliche Ausführungsform, beispielsweise für Etagenwerkzeuge, besteht darin, daß im Bereich eines Werkzeugblockes, der mit dem Formeinsatz versehen ist, Wärmeübertragungskanäle angeordnet sind, durch die ein flüssiges Temperiermedium geleitet wird. Beispielsweise ist es möglich, ausschließlich Kühlflüssigkeit mit entsprechender Ansteuerung durch den Werkzeugblock hindurchzuleiten und hierdurch die erforderliche Abkühlung der gespritzten Werkstücke durchzuführen. Ebenfalls ist es bereits bekannt, eine alternierende Beschickung der Wärmeübertragungskanäle mit Kühlflüssigkeit und mit Heizflüssigkeit vorzusehen, um das gewünschte Wärmeprofil zu erzeugen.

Aufgrund der zur Bereitstellung der erforderlichen Druckfestigkeit erheblichen Massen des Werkzeugblockes treten thermische Zeitkonstanten auf, die dazu führen, daß die Produktionsgeschwindigkeit Einschränkungen unterliegt. Ein Einspritzen der plastifizierten Substanz kann erst nach einer ausreichenden Erwärmung erfolgen und ein Entformen ist erst nach einer erforderlichen Abkühlphase durchführbar.

Aufgabe der vorliegenden Erfindung ist es daher, ein Verfahren der einleitend genannten Art derart zu verbessern, daß die Produktionsgeschwindigkeit erhöht wird. Diese Aufgabe wird erfindungsgemäß dadurch gelöst, daß der Formeinsatz relativ zum Werkzeugblock thermisch isoliert wird und daß das flüssige Temperiermedium durch Einsatzkanäle hindurchgeleitet wird.

Weitere Aufgabe der vorliegenden Erfindung ist es, eine Vorrichtung der einleitend genannten Art derart zu konstruieren, daß verbesserte Möglichkeiten zur Temperatursteuerung bereitgestellt werden.

Diese Aufgabe wird erfindungsgemäß dadurch gelöst, daß zwischen dem Werkzeugblock und dem Formeinsatz ein thermischer Isolator angeordnet ist und daß der Formeinsatz Einsatzkanäle aufweist, die an ein Umschaltelement zur steuerbaren Zuführung von mindestens zwei Temperiermedien unterschiedlicher Temperatur angeschlossen sind.

Durch die thermische Isolierung der Formeinsätze relativ zum Werkzeugblock ist es lediglich erforderlich, das vorgesehene Temperaturprofil im Bereich der Formeinsätze zu realisieren, die eine wesentlich geringere Masse als der Werkzeugblock aufweisen. Es werden somit zum einen erheblich geringere Energiemengen benötigt, um die jeweils angestrebten Temperaturen zu erreichen, darüber hinaus können die Temperaturen aufgrund der kleineren thermischen Zeitkonstanten wesentlich schneller erreicht werden. Es erfolgt somit sowohl ein schnelleres Abkühlen des eingespritzten plastifizierten Materials, darüber hinaus erfolgt nach einer Entnahme der Werkstücke auch ein beschleunigtes Temperieren der Formeinsätze auf Einspritztemperatur.

Zur aktiven Vorgabe eines Temperaturverlaufes wird vorgeschlagen, daß ein Temperiermedium zur Beheizung und ein Temperiermedium zur Kühlung verwendet wird.

Zur Vermeidung eines Verbleibens eines Temperiermediums mit einer aktuell unpassenden Temperatur im Bereich des Formeinsatzes wird vorgeschlagen, daß die Temperiermedien unterschiedlicher Temperatur zeitlich nacheinander durch gemeinsame Einsatzkanäle hindurchgeleitet werden und daß die zeitliche Reihenfolge der Einleitungen von einem Umschalter vorgegeben wird.

Eine kompakte Umschaltung kann dadurch realisiert werden, daß als Umschalter ein Magnetventil verwendet wird.

Eine Verkürzung der Zykluszeit durch Verringerung einer abzuführenden und zuzuführenden Menge an Temperiermedium wird dadurch ermöglicht, daß der Umschalter mit einem geringen Abstand zum Formeinsatz angeordnet wird.

Eine kompakte Anordnung wird dadurch bereitgestellt, daß der Umschalter im Bereich des Werkzeugblockes angeordnet wird.

Eine weitere Verringerung von thermischen Trägheitseffekten kann dadurch erfolgen, daß der Umschalter im Bereich des Formeinsatzes angeordnet wird.

Zur Anpassung der Temperaturumschaltvorgänge an zu durchlaufende Produktionsschritte wird vorgeschlagen, daß die zeitliche Reihenfolge der Zuleitung von Temperiermedien unterschiedlicher Temperatur koordiniert zu einer Werkstückentnahme durchgeführt wird.

Eine Kompensation von thermischen Materialträgheiten kann dadurch erfolgen, daß ab einer Öffnung des Werkzeuges zur Werkstückentnahme ein Heizvorgang durchgeführt wird.

Eine weitere Ausnutzung der thermischen Trägheiten zur Verringerung der Zykluszeit kann dadurch erfolgen, daß eine Beheizung bereits vor einer Öffnung der Form gestartet wird.

Eine exakte Einhaltung von Solltemperaturen kann dadurch erfolgen, daß der Temperaturverlauf im Bereich des Formeinsatzes geregelt wird.

Eine Temperaturvorgabe zu jedem Produktionszeitpunkt kann dadurch erfolgen, daß für die Regelung ein Solltemperaturprofil im Bereich des Formeinsatzes vorgegeben wird.

Die Zuschaltung und Abschaltung der Temperiermedien kann dadurch unterstützt werden, daß das Umschaltelement als ein Magnetventil ausgebildet ist.

Eine mögliche Realisierung des thermischen Isolators besteht darin, daß der Isolator aus Keramik ausgebildet ist.

Zur Unterstützung einer Temperaturvorgabe wird vorgeschlagen, daß im Bereich des Formeinsatzes mindestens ein Temperaturfühler angeordnet ist.

Eine gerätetechnische Realisierung der Temperaturregelung erfolgt dadurch, daß der Temperaturfühler mit einer Regelungseinrichtung verbunden ist.

Eine langandauernde Betriebsfähigkeit der Spritzgußeinrichtung kann dadurch unterstützt werden, daß der Werkzeugblock eine separate Kühlung aufweist.

Eine wesentliche Eigenschaft des erfindungsgemäßen Verfahrens ist darin zu sehen, daß abwechselnd eine Beheizung und eine Kühlung durchgeführt wird. Ebenfalls erfolgt eine thermische Isolierung der Formen relativ zu einem Maschinenbett. Darüber hinaus besteht eine wesentliche konstruktive Eigenschaft darin, wie die unterschiedlich temperierten flüssigen Medien derart umschaltbar der Spritzgußform zugeführt werden können, daß das vorgesehene Temperaturprofil eingehalten werden kann.

Ebenfalls ist eine wesentliche Eigenschaft der Erfindung darin zu sehen, daß konstruktiv sehr einfache Elemente zur Durchführung der thermischen Isolierung der Einsätze relativ zum Werkzeug vorgesehen sind. Dies können beispielsweise Keramikplatten sein. Es ist hierdurch lediglich eine Temperierung der räumlich begrenzten Form erforderlich und Umtemperierungen des Werkzeuges müssen nicht durchgeführt werden. Der wesentliche Bereich des Werkzeuges hat hierdurch eine Temperatur, die annähernd der Temperatur des Maschinenbettes entspricht. Isolierungen zwischen dem Werkzeug und dem Maschinenbett können deshalb bei der überwiegenden Anzahl der Anwendungen entfallen.

Insbesondere ist gemäß der vorliegenden Erfindung auch daran gedacht, die komplette Form gegenüber dem Werkzeug zu isolieren, so daß eine relativ massive und damit mechanisch stabile Konstruktion der Form beibehalten wird. Gegenüber einer grundsätzlich ebenfalls denkbaren Variante der Erfindung, bei der ein mehrschichtiger Aufbau der Form realisiert wird und mindestens eine der Schichten aus einem Isolationsmaterial besteht, hat eine vollständige Isolierung der Form sowohl Vorteile hinsichtlich des Preises als auch hinsichtlich der Lebensdauer unter Berücksichtigung der erheblichen Kräfte, die bei der Durchführung des Spritzgußvorganges auf die Form einwirken. Grundsätzlich wird durch die vorliegende Erfindung aber ebenfalls ein mehrschichtiger Aufbau der Form, bei dem innerhalb der Form isolierende Schichten angeordnet sind, umfaßt.

In der Zeichnung sind Ausführungsbeispiele der Erfindung schematisch dargestellt. Es zeigen:
- Fig. 1:: eine vereinfachte Querschnittdarstellung durch ein Etagenwerkzeug, das mit thermisch isolierten Formeinsätzen versehen ist,
- Fig. 2:: eine Prinzipdarstellung eines Umschaltelementes für das Temperiermedium,
- Fig. 3:: eine Prinzipdarstellung eines anderen Umschaltelementes
**und**
- Fig. 4:: ein Diagramm zur Veranschaulichung eines Temperaturverlaufes im Bereich eines Formeinsatzes in Abhängigkeit einer zeitlich gesteuerten Zuführung von Heiz- und Kühlmedien.

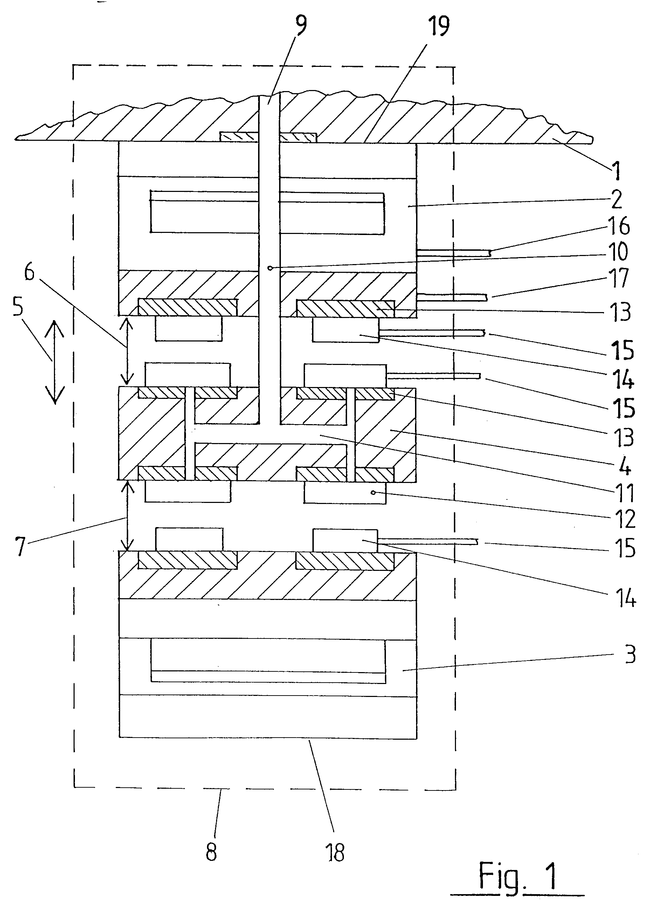

Die in Fig. 1 dargestellte Vorrichtung zum Spritzgießen ist als ein Etagenwerkzeug ausgebildet, bei dem im Bereich eines Trägers (1) ein stationärer Werkzeugblock (2) angeordnet ist. Zwischen dem stationären Werkzeugblock (2) und einem beweglichen Werkzeugblock (3) ist ein Mittelbalken (4) angeordnet. Der bewegliche Werkzeugblock (3) und der Mittelbalken (4) sind bezüglich ihres Bewegungsbereiches mechanisch derart verkoppelt, daß bei einer Entfernung des beweglichen Werkzeugblockes (3) vom stationären Werkzeugblock (2) in Bewegungsrichtung (5) der bewegliche Werkzeugblock (3) den doppelten Weg durchläuft, den der Mittelbalken (4) zurücklegt. Dies führt dazu, daß bei einer Öffnungsbewegung Abstände (6,7) zwischen dem stationären Werkzeugblock (2) und dem Mittelbalken (4) einerseits und dem beweglichen Werkzeugblock (3) und dem Mittelbalken (4) andererseits im wesentlichen gleich dimensioniert sind. Die Bewegungskoordinierung kann beispielsweise über Spindeln oder über Zahnräder erfolgen.

Vom stationären Werkzeugblock (2), dem beweglichen Werkzeugsblock (3) und dem Mittelbalken (4) wird ein Werkzeug (8) ausgebildet. In den Bereich des Werkzeuges (8) ist ein Schnorchel (9) mit einem Heizkanal (10) verlegt, der sich durch den stationären Werkzeugblock (2) hindurch erstreckt und an den Mittelbalken (4) angekoppelt ist. Im Bereich des Mittelbalkens (4) mündet der Heizkanal (10) in Verteilerkanäle (11) ein, die im Bereich von Formnestern (12) enden.

Bei der Ausführungsform gemäß Fig. 1 sind im Bereich jeder einem der Werkzeugblöcke (2,3) zugewandter Seiten des Mittelbalkens (4) zwei Formnester (12) angeordnet. In Abhängigkeit von der jeweils vorgesehenen Größe der Werkstücke sowie der Spritzgußeinrichtung kann die Anzahl der Formnester (12) beliebig variiert werden. Zwischen den Formnestern (12) und dem Mittelbalken (4) sind thermische Isolatoren (13) angeordnet. Die thermischen Isolatoren (13) können beispielsweise aus Keramik ausgebildet sein. Es ist aber auch möglich, andere druckfeste Wärmedämmungen zu verwenden.

Im Bereich der dem Mittelbalken (4) zugewandten Begrenzungsflächen der Werkzeugblöcke (2,3) sind korrespondierend zu den Formnestern (12) Einsätze (14) angeordnet, die bei einer Kombination mit den Formnestern (12) bei einem aneinander anliegen der Werkzeugblöcke (2,3) und des Mittelbalkens (4) die mit dem thermoplastischen Material auszufüllenden Konturräume aufspannen. Zwischen den Einsätzen (14) und den Werkzeugblöcken (2,3) sind ebenfalls thermische Isolatoren (13) angeordnet. Die Formnester (12) und die Einsätze (14) bilden Formeinsätze für die Werkzeugblöcke (2,3) aus.

Zur Temperierung der Formnester (12) sind Einsatzkanäle (15) vorgesehen, die an Temperiermedienzuleitungen (15) angeschlossen sind. Bei der Ausführungsform gemäß Fig. 1 sind ebenfalls im Bereich der Einsätze (14) Temperiermedienzuleitungen (15) angeordnet. Die Zuleitungen (15) können entweder direkt in den Bereich der Formnester (12) und der Einsätze (14) verlegt sein, es ist aber ebenfalls möglich, eine Fixierung der Zuleitungen (15) im Bereich der Werkzeugblöcke (2,3) und des Mittelbalkens (4) vorzunehmen und eine Hindurchleitung durch die Isolatoren (13) zu realisieren. Eine derartige Anordnung vergrößert die Stabilität.

Zur Kühlung des Werkzeuges (8) können im Bereich des Werkzeugblockes (2) ebenfalls Kühlmittelzuleitungen (16,17) angeordnet werden. Eine der Kühlmittelzuleitungen (16) dient zur Zuleitung des Kühlmittels, die andere Kühlmittelleitung (17) dient zur Kühlmittelabfuhr. Eine vergleichbare Ausstattung kann auch im Bereich des beweglichen Werkzeugblockes (3) realisiert werden.

Durch die vorgeschlagene Temperierung kann das Werkzeug (8) sowohl im Bereich einer Auswerferseite (18) als auch im Bereich einer dem Träger (1) zugewandten Düsenseite (19) näherungsweise konstant temperiert werden. Ein zweckmäßiger Temperaturbereich beträgt 30 Grad Celsius bis 40 Grad Celsius.

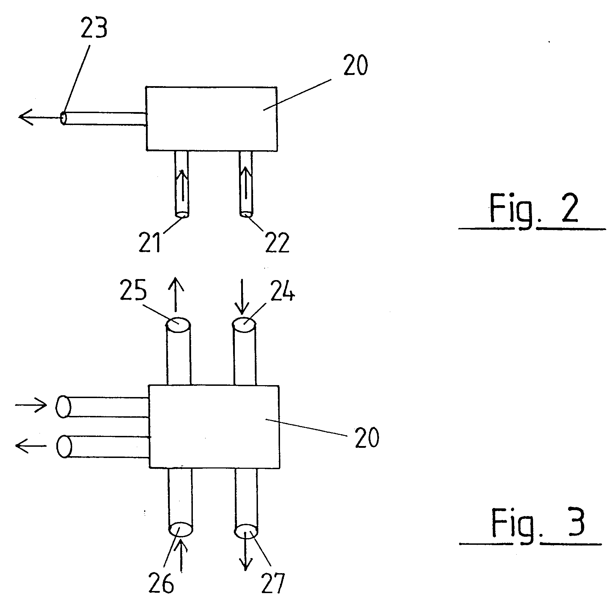

Fig. 2 zeigt eine Prinzipdarstellung eines Magnetventiles (20) zur Ansteuerung der Temperiermedienzuleitungen (15). Bei der Ausführungsform gemäß Fig. 2 weist das Magnetventil (20) zwei Eingänge (21,22) und einen Ausgang (23) auf. Einer der Eingänge (21,22) ist an Heizwasser und der andere der Eingänge (21,22) an Kühlwasser angeschlossen. Der Ausgang (23) ist mit der Temperiermedienzuleitung (15) verbunden, die in den Bereich des Formnestes (12) oder des Einsatzes (14) führt. Aus dem Bereich des Formnestes (12) und des Einsatzes (14) abfließendes Temperiermedium wird einer Sammelleitung zugeführt.

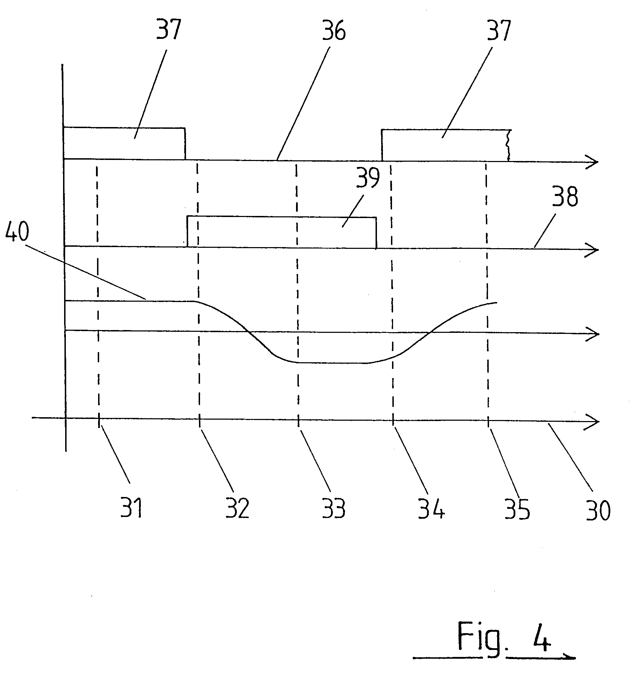

Zur weiteren Energieeinsparung durch Vermeidung einer Vermischung von Temperiermedien unterschiedlicher Temperatur ist das Magnetventil (20) gemäß Fig. 3 mit sechs Anschlüssen versehen. Es sind zwei Heißwasseranschlüsse (24,25), zwei Kühlwasseranschlüsse (26,27) sowie zwei Verbindungsanschlüsse (28,29) vorgesehen. Die Verbindungsanschlüsse (28,29) führen in den Bereich eines Formnestes (12) beziehungsweise eines Einsatzes (14). Durch entsprechende Umschaltung innerhalb des Magnetventils (20) wird dafür gesorgt, daß bei einer Beheizung aus einem der Heißwasseranschlüsse (24) Heißwasser entnommen und nach einem Durchlauf durch das zu temperierende Bauteil das abfließende Heißwasser dem anderen Heißwasseranschluß (25) zugeleitet wird.

Im Kühlbetrieb wird dem Kühlwasseranschluß (26) das Kühlwasser entnommen und das rückfließende Kühlwasser wird dem Kühlwasseranschluß (27) zugeführt. Die Verbindungsanschlüsse (28,29) dienen zum Anschluß an das Formnest (12) beziehungsweise den Einsatz (14). Es wird durch diese Konstruktion eine Vermischung von Heizwasser und Kühlwasser vermieden. Das Magnetventil (20) schaltet hierzu beide Verbindungsanschlüsse (28,29) entweder zu den Heißwasseranschlüssen (24,25) oder zu den Kühlwasseranschlüssen (26,27) durch.

Eine weitere Energieeinsparung sowie eine Verringerung der thermischen Zeitkonstanten kann dadurch erzielt werden, daß die Magnetventile (20) relativ dicht im Bereich der Formnester (12) beziehungsweise der Einsätze (14) angeordnet werden. Neben einer unmittelbaren Anordnung im Bereich dieser Bauelemente ist auch eine benachbarte Anordnung im Bereich der zugeordneten Werkzeugblöcke (2,3) oder des Mittelbalkens (4) möglich. Bei einer Anordnung von Temperiermedien führenden Bauelementen im Bereich der Werkzeugblöcke (2,3) beziehungsweise des Mittelbalkens (4) ist insbesondere daran gedacht, zusätzliche thermische Isolierungen zu verwenden, um Wärmeübergänge zu reduzieren.

Fig. 4 zeigt ein Beispiel für eine mögliche Steuerung einer Zufuhr von Heizwasser und Kühlwasser. Entlang einer Zeitachse (30) sind ein Einspritzbeginn (31), ein Einspritzende (32), ein Formöffnungsbeginn (33), eine Werkstückentnahme (34) sowie ein Formschließen (35) eingetragen. Das Einspritzende (32) umfaßt dabei sowohl das unmittelbare Einspritzen als auch das sich anschließende Nachdrücken von plastifiziertem Material zur Kompensation von Materialkontraktionen durch Abkühlung.

Entlang einer Heizachse (36) sind Heizphasen (37) und entlang einer Kühlachse (38) Kühlphasen (39) eingetragen. Aufgrund auftretender thermischer Zeitkonstanten ergibt sich hieraus ein Temperaturverlauf (40), der schematisch eingetragen wurde.

Zur Temperierung der Formnester (12) und der Einsätze (14) können Temperiermedien unterschiedlicher Temperatur verwendet werden. Insbesondere ist daran gedacht, aufgrund der gesteuerten Kühlung ein Temperiermedium zu verwenden, das eine Temperatur unterhalb von 0 Grad Celsius aufweist. Zur Durchführung der erforderlichen Beheizung ist es möglich, anfallende Abwärme zu nutzen. Dies kann beispielsweise Abwärme bei der erfolgenden Kühlung des plastifizierten Materials sein, ebenfalls ist es aber möglich, Maschinenabwärme der Spritzgießeinrichtung oder Abwärme anderer Maschinen zu verwenden. Grundsätzlich ist es ebenfalls möglich, beliebig zur Verfügung stehende Abwärme, beispielsweise Gebäudeabwärme oder Abwärme von Klimaanlagen, zu verwenden.

Dem Diagramm in Fig. 4 ist zu entnehmen, daß aufgrund der auftretenden thermischen Trägheiten der eingesetzten Materialien die Heizphasen (37) und die Kühlphasen (39) jeweils mit vorgebbaren zeitlichen Versätzen vor einem eigentlichen Heizbeginn beziehungsweise Kühlbeginn starten. Dies führt zu einer weiteren Verringerung der Zykluszeiten.

Neben einer reinen Steuerung der Temperaturen ist es ebenfalls möglich, im Bereich der zu temperierenden Elemente Temperaturfühler einzusetzen und über entsprechende Regler die entsprechenden Magnetventile anzusteuern. Hierdurch können exakt vorgegebene Temperaturprofile nachgefahren werden. Eine weitere gesteigerte Regelgüte läßt sich dadurch erzielen, daß für die Heiz- und Kühlvorgänge ein Zweikreissystem eingesetzt wird.

Eine Verringerung der Zykluszeit gegenüber den Verläufen in Fig. 4 läßt sich erreichen, wenn bereits kurz nach dem Einspritzbeginn (31) die Heizphase (37) endet und die Kühlphase (39) beginnt. Die entsprechenden Einsatzpunkte sind derart zu wählen, daß gerade noch für eine ausreichende Materialverteilung des plastifizierten Materials innerhalb der Form Sorge getragen wird. Die Steuerung erfolgt dabei so, daß zum einen ein zu frühes Erstarren des Materials verhindert wird, daß andererseits aber die Wärmeabfuhr zu einem frühest möglichen Zeitpunkt beginnt.

## Patentansprüche

1. Verfahren zum Spritzgießen von Werkstücken aus plastifizierbarem Material, bei dem das plastifizierbare Material erwärmt, über Zuführkanäle einem Formeinsatz eines Werkzeuges zugeleitet und nach einem Abkühlen aus dem Formeinsatz entnommen wird und bei dem im Bereich des Werkzeugs eine Temperierung durch Zufuhr eines flüssigen Temperiermediums durch Wärmeübertragungskanäle hindurch vorgesehen ist, dadurch gekennzeichnet, daß der Formeinsatz relativ zum Werkzeugblock thermisch isoliert wird und daß das flüssige Temperiermedium durch Einsatzkanäle hindurchgeleitet wird.

2. Verfahren nach Anspruch 1, dadurch gekennzeichnet, daß ein Temperiermedium zur Beheizung und ein Temperiermedium zur Kühlung verwendet wird.

3. Verfahren nach Anspruch 1 oder 2, dadurch gekennzeichnet, daß die Temperiermedien unterschiedlicher Temperatur zeitlich nacheinander durch gemeinsame Einsatzkanäle hindurchgeleitet werden und daß die zeitliche Reihenfolge der Einleitungen von einem Umschalter vorgegeben wird.

4. Verfahren nach einem der Ansprüche 1 bis 3, dadurch gekennzeichnet, daß als Umschalter ein Magnetventil verwendet wird.

5. Verfahren nach einem der Ansprüche 1 bis 4, dadurch gekennzeichnet, daß der Umschalter mit einem geringen Abstand zum Formeinsatz angeordnet wird.

6. Verfahren nach Anspruch 5, dadurch gekennzeichnet, daß der Umschalter im Bereich des Werkzeugblockes angeordnet wird.

7. Verfahren nach Anspruch 5, dadurch gekennzeichnet, daß der Umschalter im Bereich des Formeinsatzes angeordnet wird.

8. Verfahren nach einem der Ansprüche 1 bis 7, dadurch gekennzeichnet, daß die zeitliche Reihenfolge der Zuleitung von Temperiermedien unterschiedlicher Temperatur koordiniert zu einer Werkstückentnahme durchgeführt wird.

9. Verfahren nach einem der Ansprüche 1 bis 8, dadurch gekennzeichnet, daß ab einer Öffnung des Werkzeuges zur Werkstückentnahme ein Heizvorgang durchgeführt wird.

10. Verfahren nach einem der Ansprüche 1 bis 8, dadurch gekennzeichnet, daß eine Beheizung bereits vor einer Öffnung der Form gestartet wird.

11. Verfahren nach einem der Ansprüche 1 bis 10, dadurch gekennzeichnet, daß der Temperaturverlauf im Bereich des Formeinsatzes geregelt wird.

12. Verfahren nach einem der Ansprüche 1 bis 11, dadurch gekennzeichnet, daß für die Regelung ein Solltemperaturprofil im Bereich des Formeinsatzes vorgegeben wird.

13. Vorrichtung zum Spritzgießen von Werkstücken aus plastifizierbarem Material, die ein mit mindestens einem Formeinsatz und einem Werkzeugblock versehenes Werkzeug aufweist und bei der eine Temperierung vorgesehen ist, die mindestens einen Anschluß zur Zuleitung eines flüssigen Temperiermediums in den Bereich von Wärmeübertragungskanälen aufweist, die sich durch das Werkzeug hindurch erstrecken, dadurch gekennzeichnet, daß zwischen dem Werkzeugblock (1,2) und dem Formeinsatz (12,14) ein thermischer Isolator (13) angeordnet ist und daß der Formeinsatz (12,14) Einsatzkanäle aufweist, die an ein Umschaltelement zur steuerbaren Zuführung von mindestens zwei Temperiermedien unterschiedlicher Temperatur angeschlossen sind.

14. Vorrichtung nach Anspruch 13, dadurch gekennzeichnet, daß das Umschaltelement als ein Magnetventil (20) ausgebildet ist.

15. Vorrichtung nach Anspruch 13 oder 14, dadurch gekennzeichnet, daß der Isolator (13) aus Keramik ausgebildet ist.

16. Vorrichtung nach einem der Ansprüche 1 bis 15, dadurch gekennzeichnet, daß im Bereich des Formeinsatzes (12,14) mindestens ein Temperaturfühler angeordnet ist.

17. Vorrichtung nach einem der Ansprüche 13 bis 16, dadurch gekennzeichnet, daß der Temperaturfühler mit einer Regelungseinrichtung verbunden ist.

18. Vorrichtung nach einem der Ansprüche 13 bis 17, dadurch gekennzeichnet, daß der Werkzeugblock (2,3) eine separate Kühlung aufweist.
